# EUROPÄISCHE PATENTSCHRIFT

(11) **EP 1 174 374 B1**
(45) Veröffentlichungstag und Bekanntmachung des Hinweises auf die Patenterteilung: **19.02.2003**
(21) Anmeldenummer: 01115875.5
(22) Anmeldetag: 29.06.2001
(51) Int. Cl.: B65G 61/00, B65H 31/30, B66F 11/04, B65G 47/82, B65H 31/28

(54) **Vorrichtung und Verfahren zur Handhabung von Gegenständen, insbesondere von Gepäckstücken**
Device and method for handling articles, especially baggage
Procédé et dispositif de manipulation d' objets, en particulier dé bagages

(30) Priorität: 22.07.2000 DE 10035810
(43) Veröffentlichungstag der Anmeldung: 23.01.2002
(73) Patentinhaber: ABB PATENT GmbH, 68526 Ladenburg (DE)
(72) Erfinder: Nagel, Günther, Dr. rer.nat, 76676 Graben-Neudorf (DE); Gutermuth, Georg, Dipl.-Phys., 69115 Heidelberg (DE); Koini, Martin, 57636 Sörth (DE); Strube, Rainer, 70378 Stuttgart (DE)

(56) Entgegenhaltungen:
- DE-A- 3 914 596
- DE-A- 4 427 488
- DE-A- 19 728 331
- US-A- 4 383 788
- US-A- 4 823 933
- US-A- 5 087 169
- PATENT ABSTRACTS OF JAPAN vol. 010, no. 216 (M-502), 29. Juli 1986 (1986-07-29) & JP 61 055022 A (AJINOMOTO CO INC), 19. März 1986 (1986-03-19)

## Beschreibung

Die Erfindung betrifft eine Vorrichtung zur Handhabung von Gegenständen, insbesondere von Gepäckstücken. Diese Vorrichtung ist insbesondere mit einem Tragarm verbunden, der in wenigstens zwei Achsen frei beweglich ist und an einer Zentraleinheit angelenkt ist, welche am Ende einer Förderstrecke für Gegenstände, insbesondere eines Förderbands, positioniert ist, wobei die Bewegung des Tragarms vorgebbar gesteuert ist (siehe z.B. das Dokument US-A-4383788.)

Derartige Vorrichtungen werden üblicherweise als Laderoboter bezeichnet, wobei die bekannten Vorrichtungen häufig an ihrem freien, sich bewegenden Ende mit Haken oder Greifern versehen sind, mittels welcher der betreffende Gegenstand bewegt wird.

Soweit solche Vorrichtungen bislang zum Einsatz bei der Handhabung von einzelnen Gegenständen, zum Beispiel Gepäckstücken, die in ihrer äußeren Erscheinungsform bezüglich Form, Abmessungen und Gewicht höchst unterschiedlich sind vorgesehen sind beziehungsweise sein können, vorgesehen sind, kommt es immer wieder zu Problemsituationen dadurch, daß beispielsweise der betreffende Gegenstand nicht zuverlässig erfaßt wird und während der Transportbewegung auf den Boden fällt oder, um dies zu verhindern, äußerlich beschädigt wird, indem zum Erfassen vorgesehene Haken oder Greifer sich in die Hülle des Gegenstands eindrükken. Hierdurch kann sowohl die Form des Gegenstands zerstört werden als auch dessen Unversehrtheit, wodurch seine Brauchbarkeit zumindest eingeschränkt ist.

Es ist bekannt zur Aufnahme von Gegenständen, insbesondere von Gepäckstücken oder von Frachtgut an einem Roboterarm eine Aufnahmevorrichtung anzuordnen, welche wie eine zur Beladeseite offene Schublade gestaltet ist mit einer Ladefläche mit Rückwand und zwei Seitenwänden, wobei die Ladefläche als Förderband ausgebildet ist. Durch Änderung der Laufrichtung des Förderbandes wird Transportgut aufgenommen oder abgeladen.

Wenn auch diese vorgeschlagene Vorrichtung sehr effizient und materialschonend arbeitet, so ist die Ausstattung mit einer motorisch betriebenen Aufnahmevorrichtung sehr aufwendig.

Ausgehend von diesem Stand der Technik ist es Aufgabe der Erfindung, eine Vorrichtung der eingangs genannten Art zu schaffen, welche einfach gestaltet ist und dennoch eine unkomplizierte Aufnahme und Abgabe von Gegenständen unterschiedlicher Geometrie, Form sowie Masse gestattet, wobei auf material- und formschonende Handhabung zu achten ist.

Diese Aufgabe wird erfindungsgemäß durch die kennzeichnenden Merkmale des Anspruchs 1 gelöst. Weitere vorteilhafte Ausgestaltungen und Verbesserungen der Erfindung sind Gegenstand der Unteransprüche.

Dementsprechend ist vorgesehen, daß am freien Ende des Tragarms eine Ladevorrichtung angeordnet ist, welche eine Plattform zur Aufnahme von Gegenständen, insbesondere von Gepäckstücken, und je eine rückwärtige und eine seitliche Begrenzung aufweist, an welche sich der jeweils aufgenommene Gegenstand anlegt, sowie eine Entladevorrichtung, welche den aufgenommenen Gegenstand von der Plattform entfernt.

Anders als bei der vorgeschlagenen Vorrichtung ist die als Ladefläche dienende Plattform lediglich eine ebene Fläche, welche von je einer rückwärtigen und einer seitlichen Anlageleiste begrenzt ist. Außerdem ist eine Entladevorrichtung vorgesehen, die mit einfachsten Mittel beschädigungsfrei, das jeweilige Ladegut entfernt.

Um eine sichere Beladung zu gewährleisten ist vorteilhafterweise vorgesehen, daß die der Ladevorrichtung zugeordnete Plattform eben ist und um beispielsweise 15° zum Tragarm hin geneigt ist, so daß sich der aufgenommene Gegenstand schwerkraftsabhängig an die rückwärtige Begrenzung anlegt. Infolge der Neigung, welche in Weiterbildung der Erfindung von vornherein in die Plattform integriert sein kann, wird erreicht, daß das Ladegut quasi selbsttätig komplett auf die Plattform gelangt.

Bevorzugterweise kann vorgesehen sein, daß die vorgesehene seitliche Begrenzung wahlweise an der linken oder an der rechten Seite der Plattform angeordnet ist. Hierdurch ist ermöglicht, daß die erfindungsgemäße Vorrichtung an die jeweiligen örtlichen Gegebenheiten problemlos angepaßt werden kann. Dabei erweist es sich als besonders günstig, wenn die seitliche Begrenzung von einer klappbaren Leiste gebildet ist, welche an beiden Seiten vorgesehen ist, wobei jedoch nur jeweils eine Leiste zum Einsatz kommt, indem wahlweise jeweils eine hochgeklappt ist, während die andere Begrenzung vorzugsweise in die Horizontale geklappt ist.

In Weiterbildung der erfindungsgemäßen Vorrichtung kann die abgeklappte Begrenzung in der Plattform versenkt angeordnet sein oder so gestaltet sein, daß die abgeklappte Begrenzung an der Unterseite der Plattform anliegt.

Der besondere Vorteil dieser asymmetrischen Anordnung der seitlichen Anlagen beruht darauf, daß für das aufzunehmende Ladegut praktisch keine flächenmäßige Begrenzung durch das Handhabungsgerät besteht, welche dessen Verwendbarkeit einschränken würde, da die zur Verfügung stehende Ladefläche der Plattform lediglich als lastaufnehmende Fläche dient, wobei sich das Ladegut durchaus über die Seiten ohne Anlage erstrecken kann.

In weiterer Ausgestaltung der Erfindung kann die seitliche Begrenzung niedriger sein als der aufzunehmende Gegenstand. Hierbei wirkt die Anlageleiste tatsächlich nur als Anschlag für das Ladegut bei Aufnehmen der Ladung und gestattet, unterschiedlich hohe Gegenstände aufzunehmen und in vorgesehene Lagerorte mit Begrenzung nach oben, zum Beispiel in einem Regal oder in einem Container, einzubringen, ohne daß die seitliche Anlageleiste hinderlich ist.

Eine weitere vorteilhafte Ausgestaltung der Erfindung sieht vor, daß die Entladevorrichtung an der Plattform angeordnet ist. Sie ist insbesondere dadurch gekennzeichnet, daß sie den aufgenommenen Gegenstand, beispielsweise ein Gepäckstück, von der Plattform herunterschiebt. Hieraus wird klar, daß die Entladevorrichtung nur zum Freimachen der Ladeplattform dient und nicht zur Aufnahme von Ladegut vorgesehen ist

Die erfindungsgemäß vorgesehene Entladevorrichtung ist entsprechend einer Ausgestaltung von einem Schieber gebildet, der vorzugsweise parallel zur Rückwand bewegbar auf der Tragplattform angeordnet ist und wahlweise von einem hydraulischen, einem pneumatischen oder einem elektrischen Antrieb beziehungsweise einem elektrohydraulischen Antrieb beaufschlagt ist. Mit Hilfe des Schiebers kann das auf der Tragplattform befindliche Ladegut von dieser entfernt werden, indem der Schieber das Ladegut stetig in Richtung der der Rückwand gegenüberliegenden Längskante der Tragplattform beaufschlagt.

Vorteilhafterweise besitzt der Schieber eine Länge entsprechend der Tragplattform, so daß diese auf ihrer vollen Fläche vom Schieber erfaßt wird.

Entsprechend einer vorteilhaften Weiterbildung der Erfindung kann die Entladevorrichtung aber auch schwenkbar ausgeführt sein. Hierbei ist der Schieber um eine Vertikalachse bezogen auf die Tragplattform schwenkbar ausgebildet, wobei der Schieber selbst zusätzlich wenigstens ein Schwenkscharnier aufweist, das auf etwa halber Länge zwischen dem Schwenkpunkt des Schiebers und dessen freiem Ende angeordnet ist und dessen Schwenkachse ebenfalls senkrecht zur Tragplattform verläuft.

Mit Hilfe dieser Gestaltung ist es möglich, auf der Tragplattform befindliches Ladegut nicht nur entlang der Längskante der Tragplattform sondern auch seitlich abzusetzen, indem durch entsprechende Beaufschlagung des Schiebers dieser zu einer Seitenkante der Tragplattform bewegt wird und hierbei das Ladegut vor sich herschiebt.

In besonders vorteilhafter Ausgestaltung der Erfindung ist die Bewegung der Entladevorrichtung mit der Bewegung des Tragarms koordiniert. Dabei ist vorgesehen, daß im gleichen Maße, wie die Entladevorrichtung den aufgenommenen Gegenstand von der Plattform entfernt, der Tragarm mit der Plattform zurückweicht, so daß der aufgenommene Gegenstand mit Einleitung der Entladung relativ zur Abladestelle unbewegt zurückbleibt. Mit anderen Worten, das Ladegut wird mit Hilfe des Tragarms und der daran befestigten erfindungsgemäßen Vorrichtung an den Abladeort gebracht und dort in der Endposition abgelegt, indem die mit dem Tragarm koordinierte Entladevorrichtung das Ladegut daran hindert, beim Zurückziehen der Ladeplattform sich reibungsbedingt mit zu bewegen, sondern durch die Entladevorrichtung beaufschlagt in der Endposition quasi verharrt, während die Plattform vom Tragarm zurückbewegt wird.

Gemäß einer besonderen Ausführungsform der Erfindung kann vorgesehen sein, daß die Entladevorrichtung berührungslos arbeitet. Dies wird vorzugsweise dadurch erreicht, daß die Entladevorrichtung mit Druckluft arbeitet und den aufgenommenen Gegenstand mittels Druckluft von der Plattform entfernt.

Ferner betrifft die Erfindung ein Verfahren zum Aufnehmen und Verladen von Gegenständen mit einer Vorrichtung der vorstehend beschriebenen Art, wobei in einem ersten Schritt der Tragarm mit der Aufnahmeplattform an dem Förderband positioniert wird, so daß ein darauf geförderter Gegenstand, insbesondere ein Gepäckstück, auf die Plattform gefördert wird bis an die rückwärtige und seitliche Begrenzung, und in einem zweiten Schritt der Tragarm die Plattform zur Abladestelle, zum Beispiel ein Container bewegt, während in einem dritten Schritt der Gegenstand von der an der Plattform angeordneten Entladevorrichtung an der Abladestelle abgelegt wird.

Eine Weiterbildung des erfindungsgemäßen Verfahrens zeichnet sich dadurch aus, daß, wie vorstehend zur Funktionsweise der erfindungsgemäßen Vorrichtung bereits erläutert, im gleichen Maße, wie der aufgenommene Gegenstand durch die Entladevorrichtung von der Plattform entfernt wird, der Tragarm mit der Plattform zurückgezogen wird, so daß hierdurch der aufgenommene Gegenstand örtlich verharrt und nicht relativ zur Abladestelle, zum Beispiel ein Container, bewegt wird.

Diese und weitere vorteilhafte Ausgestaltungen der Erfindung sind Gegenstand der Unteransprüche.

Anhand eines in der beigefügten schematischen Zeichnung dargestellten Ausführungsbeispieles sollen die Erfindung, vorteilhafte Ausgestaltungen und Verbesserungen sowie besondere Vorteile der Erfindung näher erläutert und beschrieben werden.

Es zeigen:
- Fig. 1: eine isometrische Darstellung von der Seite einer an einem stationären Roboter angeordneten erfindungsgemäßen Vorrichtung;
- Fig. 2: die Vorrichtung in Schrägansicht von oben und
- Fig. 3: eine Draufsicht auf die in Fig. 2 gezeigte Anordnung.

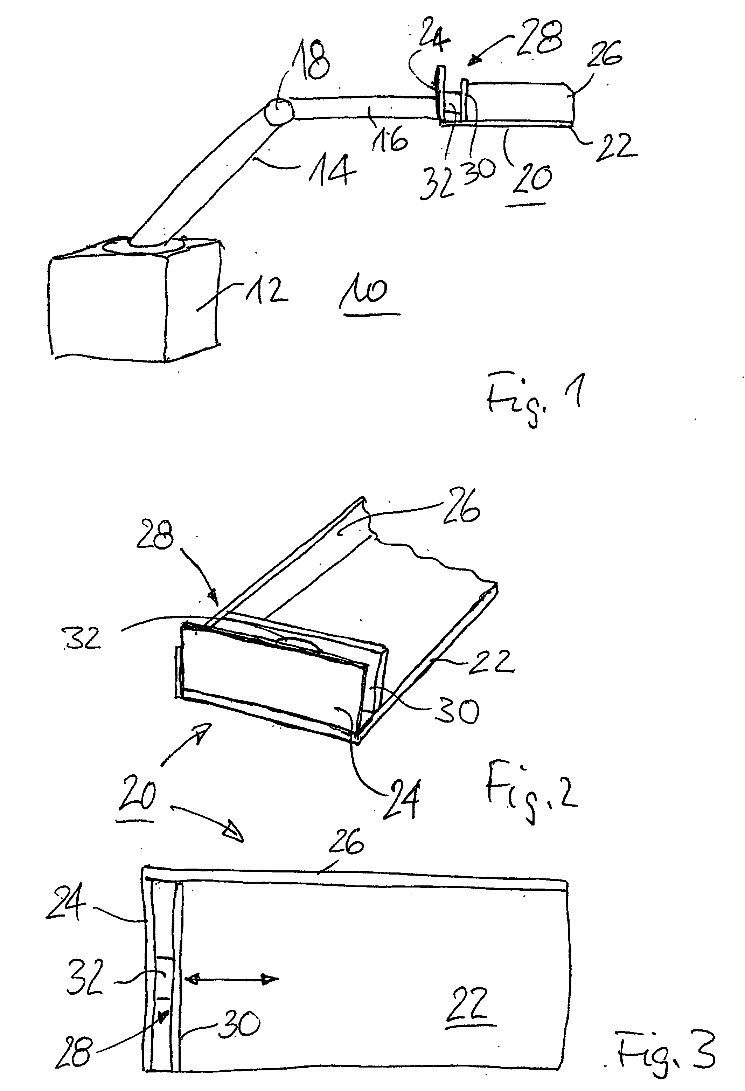

In Fig. 1 ist in isometrischer Darstellung von der Seite eine Anordnung mit einem stationären Roboter 10 gezeigt, der ein auf dem Boden stehendes Gehäuse 12 aufweist, an welchem ein zweiteiliger Tragarm mit einem Stützarm14 und einem Schwenkarm 16 dreh- und schwenkbeweglich angeordnet ist. Beide Teilarme, der Stützarm 14 und der Schwenkarm 16, sind durch ein Dreh- und Schwenkgelenk 18 miteinander verbunden, um die erforderlichen Bewegungen auszuführen.

Am freien Ende des Schwenkarmes 16 ist eine erfindungsgemäße Vorrichtung 20 drehbar angeordnet, die hinsichtlich ihrer Gestaltung in Fig. 2 und Fig. 3 näher erläutert und beschrieben wird.

Die Vorrichtung 20 ist von einer Tragplattform 22 und einer hiermit verbundenen Rückwand 24 gebildet und dient zur Aufnahme von Frachtgut jeglicher Art, insbesondere aber zur Aufnahme von Gepäckstücken. In der gezeigten Darstellung ist die Vorrichtung ohne irgendwelche Transportgüter dargestellt.

Ferner ist an mindestens einer Schmalseite, die quer zur Erstreckungsebene der Rückwand 24 verläuft, eine Seitenbegrenzung 26 vorgesehen, um ein seitliches Abgleiten des Ladeguts zu verhindern. Die Seitenwand 26 hat etwa die gleiche Höhe wie die Rückwand 24, wobei deren Höhe so vorgesehen ist, daß die Seitenwand 26 und die Rückwand 24 das Transportgut ausreichend gegen Verrutschen sichern und ferner beim Aufnehmen oder Ablegen von Transportgut keine Beeinträchtigung der Zugänglichkeit zum Lade- oder Entladeort bewirken.

Die Tragplattform 22 und die Rückwand 24 haben zueinander einen fest eingestellten Winkel, von zum Beispiel 90°, und bilden so eine schaufelähnliche Anordnung, mittels welcher das jeweilige Ladegut aufgenommen und befördert werden kann. Dabei dienen die Rückwand 24, deren Höhe vergleichsweise niedrig ist und die deshalb auch als an der Tragplattform 22 angebrachte Aufkantung vorgesehen sein kann, sowie die wenigstens eine Seitenbegrenzung für das auf der Tragplattform 22 abgelegte Transportgut als Anschlag.

Das Transportgut selbst kann von unterschiedlicher Form und Beschaffenheit sein, das heißt sowohl stabile Formen sind möglich, zum Beispiel Koffer oder Kartons, als auch instabile Formen, wie Säcke oder andere formnachgiebige Verpackungsformen. In jedem Fall wird das auf die Tragplattform 22 aufgenommene Ladegut an der Rückwand 24 in Position gehalten.

Ferner ist die Ladevorrichtung 20 mit einer Entladevorrichtung 28 ausgerüstet, mittels welcher der Entladevorgang schonend für das jeweilige Ladegut vorgenommen werden kann. Die erfindungsgemäß vorgesehene Entladevorrichtung 28 ist von einem Schieber 30 gebildet, der vorzugsweise parallel zur Rückwand 24 bewegbar auf der Tragplattform 22 angeordnet ist und wahlweise von einem hier nicht näher, sondern nur schematisch dargestellten hydraulischen, einem pneumatischen oder einem elektrischen Antrieb beziehungsweise einem elektrohydraulischen Antrieb 32 beaufschlagt ist. Mit Hilfe des Schiebers 30 kann das auf der Tragplattform 22 befindliche Ladegut von dieser entfernt werden, indem der Schieber 30 das Ladegut stetig in Richtung der der Rückwand gegenüberliegenden Längskante der Tragplattform 22 beaufschlagt.

Vorteilhafterweise besitzt der Schieber 30 eine Länge entsprechend der Tragplatte 22, so daß diese auf ihrer vollen Fläche vom Schieber 30 erfaßt wird.

Vorteilhafterweise kann der zuvor beschriebene Schieber 30 von der Rückwand selbst oder, wie im dargestellten Ausführungsbeispiel gezeigt, von einer zusätzlichen, parallel zur Rückwand 24 angeordneten beweglichen Ladewand 30 gebildet sein, welche das auf der Tragplattform 22 abgelegte Transportgut entfernt, indem die Ladewand 28 wie ein Schaber das Transportgut auf der Tragplattform 22 entlang bewegt, bis es die Tragplattform 22 verlassen hat. Anschließend nimmt die Ladewand 28 wieder ihre Ausgangsposition ein.

Die entsprechend der erfindungsgemäßen Weiterbildung vorgesehene Beweglichkeit der Rückwand 24 beziehungsweise der Ladewand 30 bietet den großen Vorteil, daß abhängig von der Ladesituation, beispielsweise beim Einladen von der Seite in ein Regal oder in einen nach oben abgedeckten Container, die Ladevorrichtung den Ladevorgang nicht nachteilig beeinflußt, indem diese beispielsweise wegen ihrer Höhe den Zugang zum Ladeziel verhindert.

In Fig. 3 ist die aus Fig. 2 bekannte Anordnung in schematischer Draufsicht dargestellt, in welcher die Wirkungsweise des Schiebers 30 mittels eines dessen Bewegungsablauf anzeigenden Doppelpfeiles deutlicher erkennbar ist, wobei die Bezugsziffern jeweils beibehalten wurden.

Entsprechend einer hier nicht näher gezeigten Ausführungsvariante der Erfindung kann die Entladevorrichtung 28 aber auch als Schwenkhebel ausgeführt sein. Hierbei ist der Schieber 30 um eine Vertikalachse bezogen auf die Tragplattform 22 schwenkbar ausgebildet, wobei der Schieber 30 selbst zusätzlich wenigstens ein Schwenkscharnier aufweisen kann, das beispielsweise auf etwa halber Länge zwischen dem Schwenkpunkt des Schiebers 30 und dessen freiem Ende angeordnet ist und dessen Schwenkachse ebenfalls senkrecht zur Erstreckungsebene der Tragplattform 22 verläuft.

Mit Hilfe der erfindungsgemäßen Gestaltung ist es möglich, auf der Tragplattform 22 befindliches Ladegut nicht nur entlang der Vorderkante der Tragplattform 22 sondern auch seitlich abzusetzen, indem durch entsprechende Beaufschlagung des Schiebers 30 dieser zu einer Seitenkante der Tragplattform 22 bewegt wird und hierbei das Ladegut vor sich herschiebt.

Die Handhabung der erfindungsgemäßen Ladevorrichtung 20 kann man sich leicht durch einen Vergleich mit einer Schaufel beziehungsweise mit einem Tortenheber verdeutlichen. Das betreffende Ladegut wird entweder von einem hier nicht gezeigten Förderband auf der Tragplattform 22 abgelegt oder durch Untergreifen beziehungsweise Unterschieben unter das Ladegut von der Tragplattform 22 aufgenommen, wobei die Rückwand 24 beziehungsweise der Schieber 30 und die wenigstens einseitig vorgesehene Seitenwand 26 die jeweilige Lage des Ladeguts auf der Tragplattform 22 sichern.

Zum Abladen des Ladeguts wird die Tragplattform 22 zunächst in Position gebracht, das heißt auf die Höhe des vorgesehenen Abladelevels eingestellt. Anschließend wird die Entladevorrichtung 28 aktiviert, welche das Ladegut von der Tragplattform 22 entfernt.

Vorteilhafterweise ist die Bewegung der Entladevorrichtung 28 mit der Bewegung des Tragarms 14, 16 koordiniert. Dabei ist vorteilhafterweise vorgesehen, daß im gleichen Maße, wie die Entladevorrichtung 28 das Ladegut von der Tragplattform 22 entfernt, der Tragarm 14, 16 mit der Tragplattform 22 zurückweicht, so daß das aufgenommene Ladegut mit Einleitung der Entladung relativ zur Abladestelle unbewegt zurückbleibt.

Mit anderen Worten, das Ladegut wird mit Hilfe des Tragarms 14, 16 und der daran befestigten erfindungsgemäßen Vorrichtung 20 an den Abladeort gebracht und dort in der Endposition abgelegt, wobei die hinsichtlich ihrer Bewegung mit dem Tragarm 14, 16 koordinierte Entladevorrichtung das Ladegut daran hindert, beim Zurückziehen der Tragplattform 22 sich reibungsbedingt mit zu bewegen, sondern durch die Entladevorrichtung 28 beaufschlagt in der Endposition quasi verharrt, während die Tragplattform 22 vom Tragarm 14, 16 zurückbewegt wird.

## Patentansprüche

1. Vorrichtung zur Handhabung von Gegenständen, insbesondere von Gepäckstücken, mit einem Tragarm (14, 16), der in wenigstens zwei Achsen frei beweglich ist und an einer Zentraleinheit (12) angelenkt ist, welche am Ende einer Förderstrecke für Gegenstände, insbesondere eines Förderbands, positioniert ist, wobei die Bewegung des Tragarms (14, 16) vorgebbar gesteuert ist,
**dadurch gekennzeichnet, daß**
am freien Ende des Tragarms (14, 16) eine Ladevorrichtung (20) angeordnet ist, welche eine Tragplattform (22) zur Aufnahme von Gegenständen, insbesondere von Gepäckstücken, und je eine Rückwand (24) und eine Seitenwand (26) aufweist, an welche sich der jeweils aufgenommene Gegenstand anlegt, sowie eine Entladevorrichtung (28), welche den aufgenommenen Gegenstand von der Tragplattform (22) entfernt.

2. Vorrichtung nach Anspruch 1, **dadurch gekennzeichnet, daß** die der Ladevorrichtung (20) zugeordnete Tragplattform (22) eben und vorzugsweise rechteckig ausgebildet ist und zum Tragarm hin geneigt ist, so daß sich der aufgenommene Gegenstand schwerkraftsabhängig an die Rückwand (24) anlegt.

3. Vorrichtung nach einem der vorherigen Ansprüche 1 oder 2, **dadurch gekennzeichnet, daß** die vorgesehene Seitenwand (26) wahlweise an der linken oder an der rechten Seite der Tragplattform (22) angeordnet ist.

4. Vorrichtung nach Anspruch 3, **dadurch gekennzeichnet, daß** die Seitenwand (26) von einer klappbaren Leiste (26) gebildet ist.

5. Vorrichtung nach einem der vorherigen Ansprüche 3 oder 4, **dadurch gekennzeichnet, daß** an beiden Seiten der Tragplattform (22) je eine klappbare Seitenwand (26) vorgesehen ist, von denen wahlweise jeweils eine hochgeklappt ist, während die andere Seitenwand abgeklappt ist.

6. Vorrichtung nach Anspruch 5, **dadurch gekennzeichnet, daß** die jeweils abgeklappte Seitenwand (26) in der Tragplattform (22) versenkt angeordnet ist.

7. Vorrichtung nach Anspruch 5, **dadurch gekennzeichnet, daß** die abgeklappte Seitenwand (26) seitlich abgeklappt ist oder soweit, daß sie an der Unterseite der Tragplattform (22) anliegt.

8. Vorrichtung nach einem der vorherigen Ansprüche, **dadurch gekennzeichnet, daß** die Seitenwand (26) niedriger ist als der aufzunehmende Gegenstand.

9. Vorrichtung nach einem der vorherigen Ansprüche, **dadurch gekennzeichnet, daß** die Entladevorrichtung (28) an der Tragplattform (22) angeordnet ist.

10. Vorrichtung nach Anspruch 9, **dadurch gekennzeichnet, daß** die Entladevorrichtung (28) den aufgenommenen Gegenstand, insbesondere ein Gepäckstück, von der Tragplattform (22) herunterschiebt.

11. Vorrichtung nach einem der vorherigen Ansprüche 9 oder 10, **dadurch gekennzeichnet, daß** die Bewegung der Entladevorrichtung (28) mit der Bewegung des Tragarms (14, 16) koordiniert ist.

12. Vorrichtung nach einem der vorherigen Ansprüche 9 bis 11, **dadurch gekennzeichnet, daß** im gleichen Maße, wie die Entladevorrichtung (28) den aufgenommenen Gegenstand von der Tragplattform (22) entfernt, der Tragarm (14, 16) mit der Tragplattform (22) zurückweicht, so daß der aufgenommene Gegenstand mit Einleitung der Entladung relativ zur Abladestelle unbewegt ist.

13. Vorrichtung nach einem der vorherigen Ansprüche 9 bis 12, **dadurch gekennzeichnet, daß** die Entladevorrichtung (28) berührungslos arbeitet.

14. Vorrichtung nach einem der vorherigen Ansprüche 9 bis 13, **dadurch gekennzeichnet, daß** die Entladevorrichtung (28) mit Druckluft arbeitet und den aufgenommenen Gegenstand mittels Druckluft von der Tragplattform (22) entfernt.

15. Verfahren zum Aufnehmen und Verladen von Gegenständen mit einer Vorrichtung nach einem der vorherigen Ansprüche, **dadurch gekennzeichnet, daß** in einem ersten Schritt der Tragarm (14, 16) mit der Tragplattform (22) an einem Förderband positioniert wird, so daß ein darauf geförderter Gegenstand, insbesondere ein Gepäckstück, auf die Tragplattform (22) gefördert wird bis an die Rück- und Seitenwand (24, 26), daß in einem zweiten Schritt der Tragarm (14, 16) die Tragplattform (22) zur Abladestelle, zum Beispiel ein Container bewegt, und daß in einem dritten Schritt der Gegenstand von der an der Tragplattform (22) angeordneten Entladevorrichtung (28) an der Abladestelle abgelegt wird.

16. Verfahren nach Anspruch 15, **dadurch gekennzeichnet, daß** im gleichen Maße, wie der aufgenommene Gegenstand durch die Entladevorrichtung (28) von der Tragplattform (22) entfernt wird, der Tragarm (14, 16) mit der Tragplattform (22) zurückgezogen wird, so daß hierdurch der aufgenommene Gegenstand örtlich verharrt und nicht relativ zur Abladestelle, zum Beispiel ein Container, bewegt wird.

## Claims

1. Device for handling objects, in particular items of luggage, having a supporting arm (14, 16) which is freely moveable in at least two axes and is articulated on a central unit (12) which is positioned at the end of a conveying track for objects, in particular a conveyor belt, where the movement of the supporting arm (14, 16) is controlled in a predeterminable manner, **characterized in that** a loading device (20) is arranged at the free end of the supporting arm (14, 16), the said loading device having a supporting platform (22) for picking up objects, in particular items of luggage, and a back wall (24) and a side wall (26) against which the object picked up in each case rests, and also an unloading device (28) which removes the object which has been picked up from the supporting platform (22).

2. Device according to Claim 1, **characterized in that** the supporting platform (22) which is assigned to the loading device (20) is of level and preferably rectangular design and is inclined towards the supporting arm, so that the object which has been picked up rests against the back wall (24) as a function of gravity.

3. Device according to one of the preceding Claims 1 or 2, **characterized in that** the side wall (26) which is provided is arranged either on the left or on the right side of the supporting platform (22).

4. Device according to Claim 3, **characterized in that** the side wall (26) is formed by a foldable strip (26).

5. Device according to one of the preceding Claims 3 or 4, **characterized in that** a foldable side wall (26) is provided on both sides of the supporting platform (22) and one of the said boundaries is in each case optionally folded upwards while the other side wall is folded downwards.

6. Device according to Claim 5, **characterized in that** the side wall (26) which is folded downwards in each case is arranged recessed in the supporting platform (22).

7. Device according to Claim 5, **characterized in that** the side wall (26) which is folded downwards is folded downwards laterally or until it bears against the lower side of the supporting platform (22).

8. Device according to one of the preceding claims, **characterized in that** the side wall (26) is lower than the object which is to be picked up.

9. Device according to one of the preceding claims, **characterized in that** the unloading device (28) is arranged on the supporting platform (22).

10. Device according to Claim 9, **characterized in that** the unloading device (28) pushes down the object which has been picked up, in particular an item of luggage, from the supporting platform (22).

11. Device according to one of the preceding Claims 9 or 10, **characterized in that** the movement of the unloading device (28) is coordinated with the movement of the supporting arm (14, 16).

12. Device according to one of the preceding Claims 9 or 10, **characterized in that** in proportion to the unloading device (28) removing the object which has been picked up from the supporting platform (22), the supporting arm (14, 16) together with the supporting platform (22) recedes, so that the object which has been picked up is stationary relative to the depositing point when unloading is initiated.

13. Device according to one of the preceding Claims 9 to 12, **characterized in that** the unloading device (28) operates in a contact-free manner.

14. Device according to one of the preceding Claims 9 to 13, **characterized in that** the unloading device (28) operates with compressed air and removes the object which has been picked up from the supporting platform (22) by means of compressed air.

15. Method for picking up and loading objects using a device according to one of the preceding claims, **characterized in that** in a first step the supporting arm (14, 16) is positioned together with the supporting platform (22) on a conveyor belt, so that an object which is conveyed thereon, in particular an item of luggage, is conveyed onto the supporting platform (22) as far as the back and side walls (24, 26), and that in a second step the supporting arm (14, 16) moves the supporting platform (22) to the depositing point, for example a container, and **in that** in a third step the object is deposited at the depositing point by the unloading device (28) arranged on the supporting platform (22).

16. Method according to Claim 15, **characterized in that** in proportion to the object which has been picked up being removed from the supporting platform (22) by the unloading device (28), the supporting arm (14, 16) together with the supporting platform (22) is pulled back, so that the object which has been picked up thereby remains in place and is not moved relative to the depositing point, for example a container.

## Revendications

1. Dispositif de manutention d'objets, notamment de bagages, avec un bras porteur (14, 16) librement mobile suivant au moins deux axes et articulé à une unité centrale (12) positionnée à l'extrémité d'un chemin de roulement pour objets, notamment d'une bande transporteuse, le mouvement du bras porteur (14, 16) étant commandé d'une manière pouvant être spécifiée à l'avance,
**caractérisé en ce que**,
à l'extrémité du bras porteur (14, 16), est disposé un dispositif de chargement (20) comportant une plate-forme porteuse (22) destinée à recevoir des objets, notamment des bagages, et respectivement une paroi arrière (24) et une paroi latérale (26) contre lesquelles vient s'appuyer l'objet qui vient d'être chargé ainsi qu'un dispositif de déchargement (28) qui décharge l'objet de la plate-forme porteuse (22) sur laquelle il était placé.

2. Dispositif selon la revendication 1, **caractérisé en ce que** la plate-forme porteuse (22) associée au dispositif de chargement (20) est plate, de préférence rectangulaire et inclinée en direction du bras porteur de sorte que l'objet qui y est placé vient s'appuyer contre la paroi arrière (24) en fonction de la force de gravité.

3. Dispositif selon l'une quelconque des revendications précédentes 1 ou 2, **caractérisé en ce que** la paroi latérale prévue (26) est disposée optionnellement soit à gauche soit à droite de la plate-forme porteuse (22).

4. Dispositif selon la revendication 3, **caractérisé en ce que** la paroi latérale (26) est formée par une latte rabattable (26).

5. Dispositif selon l'une quelconque des revendications précédentes 3 ou 4, **caractérisé en ce qu'**une paroi latérale rabattable (26) est prévue de chaque côté de la plate-forme porteuse (22), l'une d'elles, au choix, étant relevée alors que l'autre paroi latérale est rabattue.

6. Dispositif selon la revendication 5, **caractérisé en ce que** la paroi latérale qui est rabattue (26) est escamotée dans la plate-forme porteuse (22).

7. Dispositif selon la revendication 5, **caractérisé en ce que** la paroi latérale rabattue (26) est rabattue latéralement ou du moins jusqu'à venir en appui contre la face inférieure de la plate-forme porteuse (22).

8. Dispositif selon l'une quelconque des revendications précédentes, **caractérisé en ce que** la paroi latérale (26) est plus basse que l'objet à charger.

9. Dispositif selon l'une quelconque des revendications précédentes, **caractérisé en ce que** le dispositif de déchargement (28) est disposé sur la plate-forme porteuse (22).

10. Dispositif selon la revendication 9, **caractérisé en ce que** le dispositif de déchargement (28) fait descendre l'objet, un bagage notamment, de la plate-forme porteuse (22) sur laquelle il était placé en le poussant.

11. Dispositif selon l'une quelconque des revendications précédentes 9 ou 10, **caractérisé en ce que** les mouvements du dispositif de déchargement (28) et du bras porteur (14, 16) sont coordonnés.

12. Dispositif selon l'une quelconque des revendications précédentes 9 à 11, **caractérisé en ce que**, dans la mesure où le dispositif de déchargement (28) décharge l'objet de la plate-forme porteuse (22) sur laquelle il est placé, le bras porteur (14, 16) se retire avec la plate-forme porteuse (22) de sorte que, dès le début du déchargement, ledit objet est immobile par rapport au lieu de déchargement.

13. Dispositif selon l'une quelconque des revendications précédentes 9 à 12, **caractérisé en ce que** le dispositif de déchargement (28) fonctionne sans toucher l'objet.

14. Dispositif selon l'une quelconque des revendications précédentes 9 à 13, **caractérisé en ce que** le dispositif de déchargement (28) fonctionne à l'air comprimé et décharge l'objet de la plate-forme porteuse (22) sur laquelle il a été chargé au moyen d'air comprimé.

15. Procédé de levage et de chargement d'objets avec un dispositif selon l'une quelconque des revendications précédentes, **caractérisé en ce que**, dans un premier temps, le bras porteur (14, 16) avec la plate-forme porteuse (22) est positionné sur une bande transporteuse de sorte qu'un objet, notamment un bagage, qu'elle transporte est manutentionné sur la plate-forme porteuse (22) jusqu'à venir en appui contre la paroi arrière et latérale (24, 26), que, dans un deuxième temps, le bras porteur (14, 16) achemine la plate-forme porteuse (22) vers le lieu de déchargement, un conteneur par exemple, et que, dans un troisième temps, l'objet est déposé au lieu de déchargement par le dispositif de déchargement disposé sur la plate-forme porteuse (22).

16. Procédé selon la revendication 15, **caractérisé en ce que**, dans la mesure où le dispositif de déchargement (28) décharge l'objet de la plate-forme porteuse (22) sur laquelle il est placé, le bras porteur (14, 16) se retire avec la plate-forme porteuse (22) de sorte que de ce fait l'objet chargé reste au même endroit et n'est pas déplacé par rapport au lieu de déchargement, un conteneur par exemple.
